(19) Europäisches Patentamt
European Patent Office
Office européen des brevets

(11) **EP 3 502 809 B1**

(12) **FASCICULE DE BREVET EUROPEEN**

(45) Date de publication et mention
de la délivrance du brevet:
**16.12.2020 Bulletin 2020/51**

(51) Int Cl.:
***G05B 15/02*** *(2006.01)*     ***F24D 19/10*** *(2006.01)*
***F24D 17/00*** *(2006.01)*

(21) Numéro de dépôt: **18214801.5**

(22) Date de dépôt: **20.12.2018**

(54) **PROCÉDÉ DE PILOTAGE DE BALLONS D'EAU CHAUDE SANITAIRE**

VERFAHREN ZUR STEUERUNG VON BRAUCHWARMWASSERBOILERN

METHOD FOR CONTROLLING SANITARY HOT WATER TANKS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2017 FR 1763056**

(43) Date de publication de la demande:
**26.06.2019 Bulletin 2019/26**

(73) Titulaire: **Electricité de France**
**75008 Paris (FR)**

(72) Inventeurs:
• **GIRARD, Alexandre**
**92500 RUEIL-MALMAISON (FR)**
• **JICQUEL, Jean-Marc**
**77818 MORET SUR LOING (FR)**
• **CHARBONNIER, Bruno**
**75011 PARIS (FR)**

(74) Mandataire: **Regimbeau**
**20, rue de Chazelles**
**75847 Paris Cedex 17 (FR)**

(56) Documents cités:
**FR-A1- 3 017 975**     **US-A- 4 537 348**
**US-A1- 2008 281 763**     **US-A1- 2013 289 788**

• **MABROUKA EL GUEDRI: "Caractérisation
aveugle de la courbe de charge électrique:
Détection, classification et estimation des
usages dans les secteurs résidentiel et tertiaire",
THESE DE DOCTORAT, SP?CIALIT? :
PHYSIQUE, ?COLE DOCTORALE ? SCIENCES
ET TECHNOLOGIES DE L?INFORMATION,DES
T?L?COMMUNICATIONS ET DES SYST?MES ?,
FR , 9 novembre 2009 (2009-11-09), pages 1-232,
XP002680597, Extrait de l'Internet:
URL:http://innovation.edf.com/fichiers/fck
editor/Commun/Innovation/theses/TheseElGue
dri.pdf [extrait le 2012-07-20]**

**Description**

DOMAINE TECHNIQUE

L'invention concerne le pilotage d'équipements électriques.

L'invention vise plus spécifiquement le pilotage des ballons d'eau chaude sanitaire d'une entité à partir de l'analyse de la courbe de charge correspondant à la consommation électrique totale de l'entité.

ETAT DE LA TECHNIQUE

L'eau chaude sanitaire (ECS) est généralement produite par chauffe électrique au sein de ballons, ou chauffe-eaux. Outre l'utilisation usuelle de l'ECS aux fins d'hygiène courante, il est également connu un usage permettant un « stockage » d'électricité, dans la mesure où la consommation électrique des ballons, nécessaire pour chauffer un volume d'eau, est bien antérieure au soutirage de l'eau chaude pour les besoins d'un foyer.

En vue de produire l'ECS d'une entité de taille importante, typiquement un complexe hôtelier, les volumes nécessaires conduisent à la mise en série de plusieurs ballons. Dans cette configuration, le premier ballon est alimenté par de l'eau froide, et le dernier ballon fournit l'eau chaude. Par ailleurs, l'appel d'eau chaude fait transiter de l'eau d'un ballon précédent vers un ballon suivant.

Dans le cadre de contrats « heures pleines - heures creuses » auxquels les hôtels souscrivent la plupart du temps, l'enclenchement de la production d'ECS n'est autorisée que durant les « heures creuses », typiquement la nuit, entre 22 heures et 6 heures. En tout état de cause, on entend par « heures creuses » une période durant laquelle la consommation électrique globale est relativement faible, et durant laquelle le coût associé aux consommations électriques est réduit. De telles périodes ne sont cependant pas fixes, puisqu'elles dépendent des saisons, et des entreprises de production et de distribution d'énergie.

Or, dans le cadre d'une occupation forte d'un hôtel, il est possible que l'ECS produite pendant la nuit ne suffise pas pour les besoins de la journée suivante. Il est alors connu de doter les complexes hôteliers d'un module dédié permettant de relancer la production d'ECS en heures pleines.

Dans tous les cas, il est avantageux d'être en mesure d'analyser la consommation électrique des ballons d'ECS, notamment à partir de la courbe de charge de l'entité au sein de laquelle ces ballons sont installés. En effet, si des ballons consomment trop peu, il est fort probable que leur consommation électrique serve essentiellement à assurer la compensation de déperditions thermiques. Par conséquent, leur capacité n'est pas utilisée. Il serait alors avantageux de supprimer un ou plusieurs ballon(s) et/ou de réduire la puissance souscrite.

Un autre avantage associé à la connaissance de la consommation électrique de ballons d'ECS réside dans le fait de pouvoir estimer les performances des ballons. Par exemple, si la puissance d'un ballon chute brusquement, il est probable qu'une ou plusieurs résistance(s) du ballon sont hors d'usage.

Enfin, la connaissance de la consommation électrique de ballons de production d'ECS peut permettre un pilotage des ballons afin d'étaler la production d'ECS tout au long des heures creuses, de façon à également limiter la puissance souscrite.

On connait du document FR3017975, au nom de la Demanderesse, un procédé d'extraction d'une courbe de puissance d'ECS pour un ballon dans un contexte de maison individuelle. Un tel procédé met en oeuvre une démarche de décomposition en ondelettes de la courbe de charge générale, pour pouvoir estimer la courbe de production d'ECS, sous hypothèse que les autres consommations soient suffisamment stables pour attribuer les variations de puissance à la production d'ECS. Puis, à partir de cette estimation, une identification des fortes variations de puissance est mise en oeuvre afin de bien localiser les instants de démarrage et d'arrêt. Cependant, ce procédé est limité au cas d'un unique ballon de production d'ECS, et ne permet pas donc de différencier les consommations associées à chaque ballon lorsqu'une entité possède une pluralité de ballons.

On connaît également la thèse de Mabrouka EL GUEDRI, soutenue le 9 novembre 2009 et intitulée « Caractérisation aveugle de la courbe de charge électrique : Détection, classification et estimation des usages dans les secteurs résidentiel et tertiaire ». Le procédé décrit dans cette thèse consiste à extraire la courbe de consommation électrique pour la production d'ECS d'une courbe de charge totale, la courbe de charge totale étant basée sur un relevé des consommations toutes les secondes, ce qui est coûteux à mettre en oeuvre en pratique.

Il existe donc un besoin d'optimisation de la consommation des ballons d'ECS appartenant au parc d'équipements électriques d'une entité telle qu'un complexe hôtelier, à partir de la seule courbe de charge du parc, et sans nécessiter une fréquence élevée pour la relève de ladite courbe.

RESUME DE L'INVENTION

Un but de l'invention est d'estimer le nombre de ballons de production d'ECS d'un parc électrique, et la consommation électrique de chacun de ces ballons.

Un autre but de l'invention est d'assurer le suivi des performances des ballons de production d'ECS d'un parc électrique.

Un autre but de l'invention est d'optimiser la consommation électrique de ballons de production d'ECS d'un parc électrique.

L'invention propose notamment un procédé de pilotage d'un parc d'équipements électriques comprenant une pluralité de ballons de production d'eau chaude sanitaire, le procédé comprenant les étapes de :

- acquisition de la courbe de charge du parc à un pas de temps donné, sur une période donnée,
- extraction de la courbe de charge correspondant à la pluralité de ballons à partir de la courbe de charge du parc,
- extraction de la courbe de charge correspondant à chaque ballon à partir de la courbe de charge de la pluralité de ballon extraite, et
- pilotage de l'ensemble des ballons d'eau chaude à partir des courbes de charge correspondant à chaque ballon extraites.

Grâce à un tel procédé, il est possible de mesurer la consommation électrique de chacun des ballons de production d'ECS d'un parc électrique, à partir de la seule courbe de charge du parc, acquise à une fréquence faible, typiquement celle des compteurs électriques actuellement dans le commerce. De là, le procédé permet un avantageux pilotage des ballons de production d'ECS afin d'optimiser leur consommation électrique et/ou une avantageuse identification d'avaries sur lesdits ballons.

Le procédé selon l'invention peut en outre comprendre les caractéristiques suivantes, prises seules ou en combinaison :

- l'étape d'extraction de la courbe de charge correspondant à chaque ballon comprend les étapes de :

    ∘ décomposition de la courbe de charge correspondant à la pluralité de ballons en ballons élémentaires, et
    ∘ association des ballons élémentaires pour reconstituer la courbe de charge correspondant à chaque ballon,

- l'étape d'extraction de la courbe de charge correspondant à la pluralité de ballons comprend une étape de décomposition de la courbe de charge du parc sur une base dyadique de gaussiennes,
- il comprend une étape préliminaire de génération d'heuristiques d'apprentissage à partir d'une courbe de charge d'un parc test, les heuristiques étant mis en oeuvre lors de l'étape d'extraction de la courbe de charge correspondant à la pluralité de ballons,
- l'étape de décomposition de la courbe de charge correspondant à la pluralité de ballons comprend les étapes de :

    ∘ utilisation d'une suite d'ouvertures morphologiques de taille croissante pour déterminer un ensemble d'instants de démarrage et d'arrêt de ballons, et
    ∘ appariement des instants de démarrage et d'arrêt déterminés pour générer les ballons élémentaires,

- le pas de temps est compris entre 5 et 15 minutes, et vaut de préférence 10 minutes,
- la période est comprise entre 6 et 12 heures, et vaut de préférence 8 heures,
- l'étape de pilotage comprend la détermination d'une puissance maximale disponible pour la pluralité de ballons,
- l'étape de pilotage comprend des étapes d'autorisation et/ou de blocage de la production d'eau chaude d'un ou plusieurs ballons, et
- l'étape de pilotage comprend la détection d'avaries sur un ou plusieurs ballons.

L'invention porte en outre sur un dispositif de traitement de données comprenant un processeur configuré pour exécuter les étapes d'un procédé tel que précédemment décrit.

Par ailleurs, l'invention porte sur un produit programme d'ordinateur comprenant des instructions de code de programme pour l'exécution des étapes d'un procédé tel que précédemment décrit, lorsque ce procédé est exécuté par au moins un processeur.

L'invention porte enfin sur un moyen de stockage lisible par un ordinateur, comprenant des instructions de code de programme pour l'exécution des étapes d'un procédé tel que précédemment décrit, lorsque ce procédé est exécuté par au moins un processeur.

DESCRIPTIF RAPIDE DES FIGURES

D'autres caractéristiques, buts et avantages de la présente invention apparaitront à la lecture de la description détaillée qui va suivre et en regard des dessins annexés donnés à titre d'exemple non limitatif et sur lesquels :

- la figure 1 illustre un parc électrique d'une entité telle qu'un complexe hôtelier,
- la figure 2 est un organigramme des étapes d'un exemple de réalisation d'un procédé de pilotage selon l'invention,
- la figure 3 illustre schématiquement des ballons élémentaires,
- la figure 4 est un organigramme détaillant un mode de réalisation d'appariement d'instants de démarrage et d'arrêt déterminés pour générer des ballons élémentaires,
- la figure 5 illustre un chronogramme de consommation électrique d'une pluralité de ballons de production d'ECS associés aux ballons élémentaires illustrés en figure 3,
- la figure 6 est un organigramme d'un mode de réalisation de l'étape de pilotage d'un exemple de réalisation du procédé de pilotage selon l'invention, et
- la figure 7 est un organigramme d'un autre mode de réalisation de l'étape de pilotage d'un exemple de réalisation du procédé de pilotage selon l'invention.

DESCRIPTION DETAILLEE DE L'INVENTION

Un exemple de réalisation d'un procédé de pilotage E d'un parc d'équipements électriques 1 va maintenant être décrit, en référence aux figures.

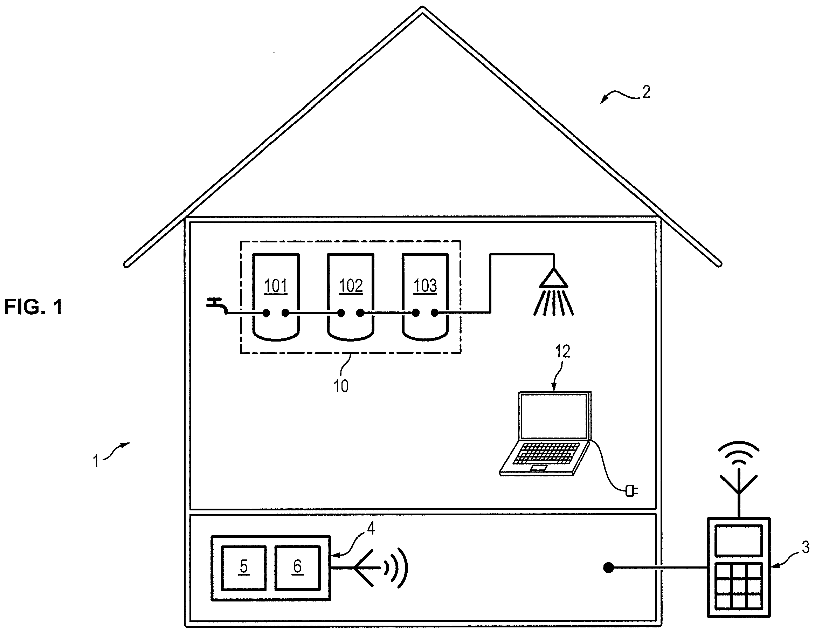

En référence à la figure 1, un parc électrique 1 comprend un ensemble d'appareils électriques 10, 12 installés au sein d'une entité donnée 2, par exemple un complexe hôtelier 2. Le parc électrique 1 peut notamment comprendre une pluralité 10 de ballons de production d'ECS 101, 102, 103, typiquement dans une configuration en séries, telle que précédemment décrit. Avantageusement, le parc électrique 1 n'est pas sous-dimensionné, c'est-à-dire que les ballons 101, 102, 103 ne chauffent pas en même temps, de sorte qu'il soit possible de distinguer des variations de puissance ne provenant que d'un seul ballon 101, 102, 103, comme il sera décrit par la suite.

L'entité 2 est également dotée d'un compteur électrique 3 configuré pour générer la courbe de charge du parc électrique 1. Le compteur 3 acquiert, à une fréquence donnée, des valeurs successives du niveau de puissance consommée par l'ensemble du parc 1. A partir des valeurs acquises, le compteur 3 génère la courbe de charge du parc électrique 1, qui correspond à l'évolution temporelle de la consommation électrique du parc 1, sur une période d'acquisition T donnée.

L'entité 2 comprend en outre un dispositif de traitement de données 4 comprenant un processeur 5 configuré pour exécuter les étapes du procédé de pilotage E. Outre le processeur 5, le dispositif de traitement de données 3 comprend un module de pilotage 6 configuré pour exécuter les étapes de pilotage du procédé de pilotage E. Le dispositif de traitement de données 4 est ainsi configuré pour acquérir la courbe de charge générée par le compteur électrique 3, mais aussi pour émettre des informations de pilotage vers les ballons 10 de production d'ECS, et pour transmettre des informations relatives aux performances des ballons 10, par exemple à l'utilisateur du parc électrique 1, ou au fournisseur d'électricité. L'acquisition de la courbe de charge et l'émission d'information peut être mise en oeuvre par toute voie de communication connue, typiquement par communication sans fil type « Wifi », ou filaire type « Ethernet ».

Avantageusement, un produit programme d'ordinateur comprenant des instructions de code de programme pour l'exécution des étapes du procédé de pilotage E peut être chargé sur le dispositif de traitement de données 4, de sorte que le procédé E soit exécuté par le processeur 5.

De manière encore plus avantageuse, un moyen de stockage lisible par un ordinateur, comprenant des instructions de code de programme pour l'exécution des étapes du procédé de pilotage E, peut être utilisé, de sorte que le procédé E soit exécuté par au moins un processeur 5.

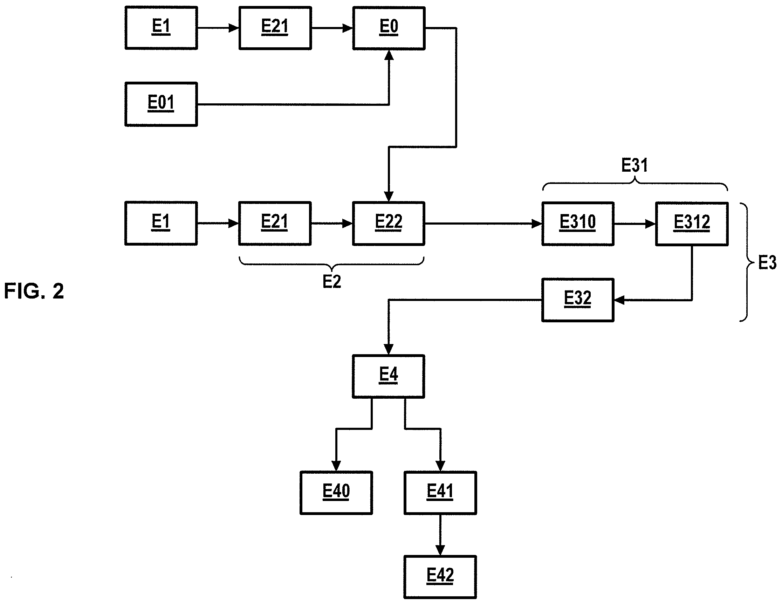

En référence à la figure 2, le procédé de pilotage comprend une première étape E1 d'acquisition de la courbe de charge du parc 1 à un pas de temps donné t, sur une période donnée T.

Avantageusement, la courbe de charge du parc 1 est acquise sur une période T comprise entre 6 et 12 heures, et vaut de préférence 8 heures. Typiquement, il s'agit de la période d'heures creuses précédemment décrite qui s'étend approximativement de 22h à 6h. Sur cette période T, mis à part la production d'ECS la consommation électrique du parc 1 est essentiellement liée au chauffage en tant que tel, et relativement peu à d'autres appareils électriques 12. Ceci garantit que les fortes variations de puissance vont être dues à la production d'ECS.

De manière encore plus avantageuse, l'acquisition E1 est mise en oeuvre à un pas de temps t compris entre 5 et 15 minutes, et valant de préférence 10 minutes. Typiquement, il s'agit du pas de temps d'acquisition t du compteur électrique 3.

Lors d'une seconde étape E2, la courbe de charge correspondant à la pluralité 10 de ballons 101, 102, 103 est extraite à partir de la courbe de charge du parc 1 acquise lors de la première étape E1.

De manière privilégiée, cette seconde étape E2 comprend une étape E21 de décomposition de la courbe de charge du parc 1 sur une base dyadique de gaussiennes. Plus précisément, la décomposition E21 est mise en oeuvre par moindres carrés à coefficients positifs sur une famille de gaussiennes à deux paramètres variables, les centres étant répartis sur toute la période T et les écarts-types variant selon des puissances de deux.

Cette décomposition E21 est mise en oeuvre en utilisant une base dyadique de gaussiennes $G = (g_{i,j})$, discrétisées aux pas de temps d'acquisition $(t_k)_{k=0,N}$, définies par :

$$g_{i,j}\left(t_k\right) = \lambda_{i,j} \exp\left(-\frac{\left(t_k - \tau_{i,j}\right)^2}{\sigma_j^2}\right)$$

avec :

$$\tau_{i,j} = \frac{i}{2^j + 1}.T ,$$
$$\sigma_j = \frac{T}{2^{j+1}}$$

T étant le temps total d'acquisition, i variant de 1 à 2j, j variant de 0 à J et $\lambda_{i,j}$ est une constante de normalisation telle que :

$$\sum_{k=0}^{N} g_{i,j}\left(t_k\right) = 1$$

Il est à noter que les gaussiennes ne sont pas des ondelettes, comme déjà connu dans des procédés d'estimation de l'art antérieur. En effet, elles ne sont pas de moyenne nulle à tous les niveaux j, et qu'il s'agit de fonctions positives, ce qui empêche des effets de compensation positif-négatif entre deux fonctions de base $g_{i,j}$.

Les valeurs de puissance électrique aux pas de temps d'acquisition $(t_k)_{k=0,N}$ sont alors stockées dans le vecteur :

$$P_{elec}^{nuit} = \begin{bmatrix} P_{elec}(t_0) \\ \vdots \\ P_{elec}(t_k) \\ \vdots \\ P_{elec}(t_N) \end{bmatrix}$$

Et les valeurs de la base de gaussiennes sont stockées dans la matrice :

$$G_j^{nuit} = \begin{bmatrix} \begin{bmatrix} g_{1,1}(t_0) \\ \vdots \\ g_{1,1}(t_k) \\ \vdots \\ g_{1,1}(t_N) \end{bmatrix} & \cdots & \cdots & \begin{bmatrix} g_{2^j+1,j}(t_0) \\ \vdots \\ g_{2^j+1,j}(t_k) \\ \vdots \\ g_{2^j+1,j}(t_N) \end{bmatrix} \end{bmatrix}$$

$$G^{nuit} = \begin{bmatrix} G_1^{nuit} & \cdots & G_j^{nuit} & \cdots & G_J^{nuit} \end{bmatrix}$$

Il est alors déterminé le vecteur a tel que :

$$a = \arg\min_{x>0} \left( \left\| G^{nuit}x - P_{elec}^{nuit} \right\|^2 \right)$$

Ce vecteur a donne ainsi les colonnes de $G^{nuit}$ qui, de façon cumulative (i.e. par somme de composantes positives), approchent au mieux la consommation électrique du parc 1.

Dans un mode de réalisation avantageux, le procédé comprend en outre une étape préliminaire E0 de génération d'heuristiques d'apprentissage à partir d'une courbe de charge d'un parc test 1, les heuristiques étant ensuite mis en oeuvre lors de la seconde étape E2 d'extraction de la courbe de charge correspondant à la pluralité 10 de ballons 101, 102, 103, comme il sera décrit par la suite.

Lors de cette étape préliminaire E0, un sous-comptage E01 de la puissance de production d'ECS est réalisé sur un parc test 1 pour le comparer avec la décomposition E21 sur la courbe de charge dudit parc, préalablement acquise E1, par exemple selon un mode de réalisation d'acquisition E1 tel que précédemment décrit. Par la suite, l'étape de décomposition E21 de la courbe de charge du parc test sur une base dyadique de gaussiennes est mise en oeuvre, par exemple selon un mode de réalisation identique que celui précédemment décrit. La combinaison du sous-comptage E01 et de la décomposition E21 permet de générer E0 les heuristiques d'apprentissage. Avantageusement, ces heuristiques peuvent ensuite être utilisées sur n'importe quel parc électrique 1, sans avoir à mettre à nouveau en oeuvre la phase d'apprentissage.

Les sous-comptages E01 par ballon 101, 102, 103 sur parc test 1 sont également décomposés en utilisant une base dyadique de gaussiennes telle que celle précédemment décrite. Il apparaît alors que cette décomposition fait systématiquement appel aux mêmes éléments de la base dyadique pour des instants de démarrage et d'arrêt données des ballons 101, 102, 103. Plus précisément, le classement des coefficients de la base dyadique en matrice telle que précédemment décrite (i.e. avec l'indice de colonne correspondant à la position du centre de la gaussienne, et l'indice de ligne correspondant au niveau de décomposition), permet d'observer que les éléments utiles de la base dyadique correspondent à plusieurs relations affines entre le centre $\tau_{i,j}$ de la gaussienne et le niveau de décomposition (caractérisé par $\sigma_j$), vont permettre de prendre en compte avec le minimum de coefficients possibles toute contribution au comptage d'un ballon 101, 102, 103 fonctionnant entre un instant de démarrage et instant d'arrêt quelconques. Une approximation du comptage global des ballons 101, 102, 103 est alors réalisée par une méthode de moindres carrés à coefficients positifs entre la base réduite des éléments sélectionnés sur la base dyadique et le comptage global. L'étape préliminaire de détermination d'heuristiques E0 permet ainsi d'extraire E22 la courbe de charge correspondant à la pluralité 10 de ballons 101, 102, 103.

A l'issu de la seconde étape E2 la courbe de charge correspondant à la pluralité 10 des ballons d'ECS 101, 102, 103 est donc extraite de la courbe de charge du parc 1. En outre, la seconde étape E2 permet également d'estimer l'écart-type des variations $\sigma_{ECS}$ (différences de puissance entre un pas de temps t et le précédent) sur cette courbe de charge.

Lors d'une troisième étape E3, la courbe de charge correspondant à chaque ballon 101, 102, 103 est extraite à partir de la courbe de charge de la pluralité 10 de ballons 101, 102, 103 générée à l'issue de la deuxième étape E2.

Pour ce faire, la courbe de charge correspondant à la pluralité de ballons est décomposée E31 en ballons élémentaires.

Lors d'une première sous-étape E310, une suite d'ouvertures morphologiques de taille croissante sont appliquées à la courbe de charge de la pluralité 10 de ballons 101, 102, 103 générée à l'issue de la deuxième étape E2. Ceci permet de localiser avec précisions les variations importantes de puissance, notamment lors de l'enclenchement des ballons 101, 102, 103. En outre, ceci permet d'obtenir un ensemble d'instants de démarrage et d'arrêt qui peuvent correspondre à plusieurs ballons 101, 102, 103 en simultané. Plus précisément, sur la courbe charge de la pluralité 10 de ballons 101, 102, 103 générée à l'issue de la deuxième étape E2, des ouvertures morphologiques (i.e. chaque point de la courbe va être remplacé par le minimum sur un intervalle de taille donné autour de ce point, puis, sur cette nouvelle courbe, chaque point de la courbe va être remplacé par le maximum sur un intervalle de taille donné autour de ce point) avec des intervalles de filtrage de plus en plus grands vont successivement être appliquées pour récupérer successivement les instants de variation à la hausse et à la baisse en soustrayant le résultat de chaque ouverture à la courbe charge de la pluralité 10 de ballons 101, 102, 103 générée à l'issue de la deuxième étape E2 et en récupérant les fortes variations.

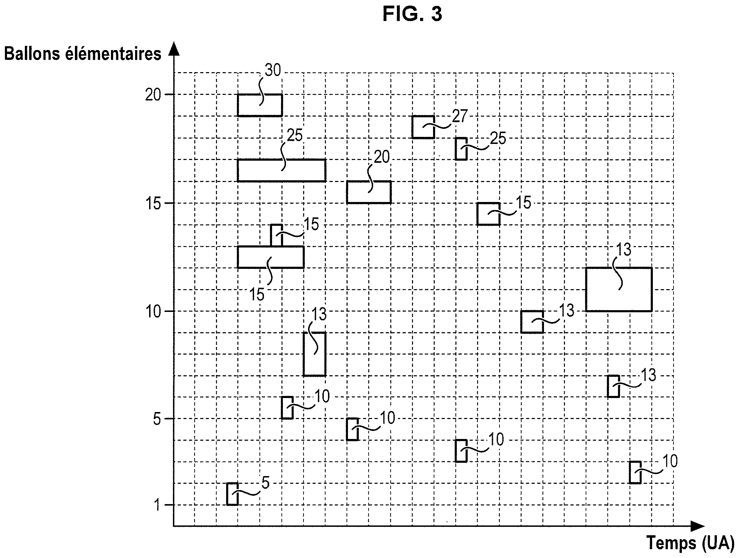

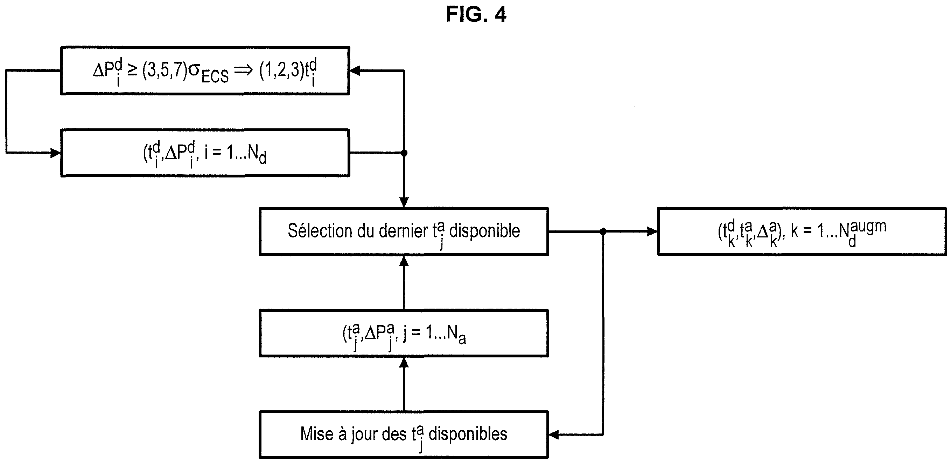

Lors d'une seconde sous-étape E312, les instants de démarrage et d'arrêt sont appariés pour pouvoir faire apparaître des ballons élémentaires. Comme visible sur la figure 3, ces ballons élémentaires peuvent être représentés par des rectangles symbolisant un instant de démarrage, un instant d'arrêt et une puissance. Sur la figure 3, la longueur d'un rectangle selon l'axe des abscisses fournit la durée de consommation, la longueur du rectangle selon l'axe des ordonnées fournit le nombre de ballons élémentaires identifiés sur la durée de consommation, et le nombre associé par pointeur fournit la puissance consommée par le(s) ballon(s) élémentaire(s) identifiés. L'unité de puissance est arbitraire. Le terme élémentaire est utilisé car les rectangles correspondent à la puissance qui a été appelée par un ballon 101, 102, 103 sur la période considérée. Plus précisément, lorsque la variation de consommation estimée dépasse 3, 5 ou 7 fois l'écart-type des variations de consommation $\sigma_{ECS}$, il est alors supposé que démarrent ou arrêtent respectivement 2, 3 ou 4 ballons 10. Ceci fournit une première liste de démarrages et d'arrêts. Par la suite, cette première liste est traitée pour obtenir le même nombre de démarrages et d'arrêts et faire en sorte que les instants d'arrêt soient tous postérieurs à un démarrage au moins. Lorsque le nombre d'instants de démarrage est inférieur au nombre d'instants d'arrêt, les instants existants de démarrage sont démultipliés selon que la variation associée est proche d'un des seuils 3, 5 ou 7 écarts-types. Les instants de démarrage et d'arrêt sont ensuite appariés selon le principe du dernier entré, premier sorti. Cela crée alors un ensemble de ballons élémentaires (caractérisés par un instant de démarrage, un instant d'arrêt et une puissance). On dispose alors d'une liste d'instants de démarrage $\left(t_i^d\right), i = 1 \dots N_d$, et d'arrêt $\left(t_j^a\right), j = 1 \dots N_a$, et les variations de puissance en valeur absolue associées $\left(\Delta P_i^d\right), i = 1 \dots N_d$, et d'arrêt $\left(\Delta P_j^a\right), j = 1 \dots N_a$. Comme visible sur la figure 4, si, à l'instant $t_i^d$, $\Delta P_i^d \geq 3\sigma_{ECS}$, un instant de démarrage supplémentaires est ajouté avec la même valeur. Il est fait de même avec $\Delta P_i^d \geq 5\sigma_{ECS}$ et deux instants de démarrage supplémentaires, et $\Delta P_i^d \geq 7\sigma_{ECS}$ et trois instants de démarrage supplémentaires. La nouvelle liste obtenue est notée $\left(t_k^d\right), k = 1 \dots N_d^{augm}$. Pour chaque $t_k^d$ pris dans l'ordre chronologique, le dernier $t_j^a$ disponible chronologiquement lui est attribué et il est donc retiré de la liste. Les éventuels instants non encore appariés sont alors supprimés. La puissance associée pour former le ballon élémentaire est alors fournie par $\Delta P_j^a$.

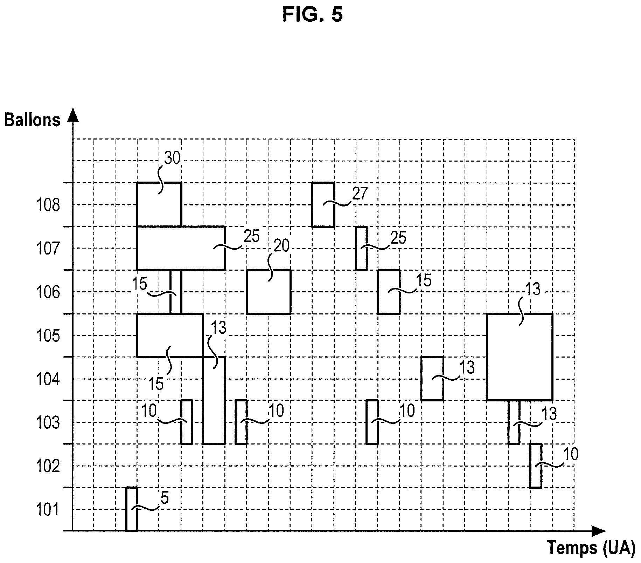

Pour déterminer un chronogramme d'un ballon complet 101, 102, 103, il faut associer un ou plusieurs de ces ballons élémentaires. Ainsi, comme visible sur la figure 5, les ballons élémentaires sont associés E32 pour reconstituer la courbe de charge correspondant à chaque ballon 101, 102, 103, 104, 105, 106, 107, 108 du parc électrique 1. Dans l'exemple illustré sur la figure 5, on peut ainsi identifier le chronogramme de huit ballons 101, 102, 103, 104, 105, 106, 107, 108, avec leurs instants de démarrage et d'arrêt, et la puissance consommée dans l'intervalle, identifiée par un nombre associé par pointeur (unité de puissance arbitraire) sur la figure 5. Le chronogramme de la figure 5 illustre qu'un même ballon peut consommer à des niveaux de puissance différents sur toute la durée de fonctionnement. Les ballons estimés 101, 102, 103, 104, 105, 106, 107, 108 sont déterminés en appariant les ballons élémentaires selon les règles suivantes :

- deux ballons élémentaires ne peuvent être associés que si leurs supports sont disjoints, et
- deux ballons élémentaires doivent avoir des puissances suffisamment proches pour être associés.

Lors d'une quatrième étape E4, les courbes de charge correspondant à chaque ballon 101, 102, 103 sont utilisées pour piloter l'ensemble 10 des ballons d'ECS 101, 102, 103.

Dans un premier mode de réalisation, le pilotage E4 comprend tout d'abord la détermination E41 d'une puissance maximale P disponible pour la pluralité 10 de ballons 101, 102, 103. Ceci permet par la suite de mettre en place une répartition optimisée des blocs d'appel de puissance. La puissance maximale P ainsi déterminée peut en outre être utilisée par l'utilisateur ou le fournisseur d'électricité en vue de fournir une référence de puissance souscrite.

Si les ballons 101, 102, 103 sont identiques, à partir de la durée d'appel de puissance de chaque ballon 101, 102, 103, il est possible de calculer le nombre de ballons équivalents gérables en divisant la somme des durées d'appel par la durée de la période autorisée pour la production d'ECS (i.e., les heures creuses). La puissance maximale P disponible est alors le ratio entre l'énergie totale (somme des énergies consommées par les ballons) sur la durée totale disponible (heures creuses).

Si les ballons 101, 102, 103 ne sont pas identiques, il faut empiler les puissances par puissance décroissante en utilisant les créneaux temporels de puissance minimale. Par exemple, le ballon 101 de plus forte puissance est sélectionné, puis positionné en début d'heures creuses, le ballon suivant 102 étant positionné en fin d'heures creuses. La zone de recouvrement entre les deux 101, 102 fournit le niveau de puissance maximale P. Le troisième ballon 103 est en outre potentiellement découpé en début et en fin d'heures creuses de façon à éviter la zone de puissance maximale pour lisser la puissance totale appelée. Le processus d'empilement précédemment décrit pour trois ballons 101, 102, 103 peut alors être réitéré autant de fois que nécessaires pour d'autres ballons. La puissance maximale P correspond alors au maximum de cet empilement sur la période d'heures creuses.

A partir de la détermination de la puissance maximale P, il est possible de fixer une puissance maximale appelable $P_{max}$ par les ballons comme le maximum des puissances maximales P sur la période d'acquisition T considérée et, en fonction d'une priorisation, d'autoriser et/ou de bloquer la production d'un ou plusieurs ballons 101, 102, 103 selon que les plus prioritaires requiert de la puissance électrique, ou non.

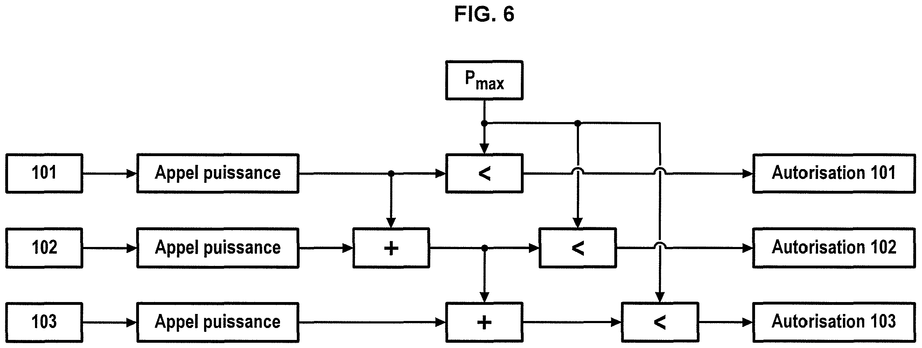

En référence à la figure 6, dans le cas où les ballons 101, 102, 103 sont identiques, les ballons étant numérotés depuis la sortie d'eau chaude vers l'entrée d'eau froide, le pilotage comprend la génération E42 d'ordre d'autorisations successives à partir de la puissance maximale déterminée $P_{max}$. Sur cette figure, le bloc « < » sort 0 (i.e. blocage de la production) si la puissance appelée est supérieure à la puissance maximale $P_{max}$, et 1 (i.e. autorisation de la production) sinon. Grâce à un tel pilotage E42, il est par exemple possible de bloquer la production d'ECS en imposant « Puissance maximale » à 0. Inversement, il est possible de bypasser le fil pilote des ballons 101, 102, 103 pour forcer la mise en route des ballons.

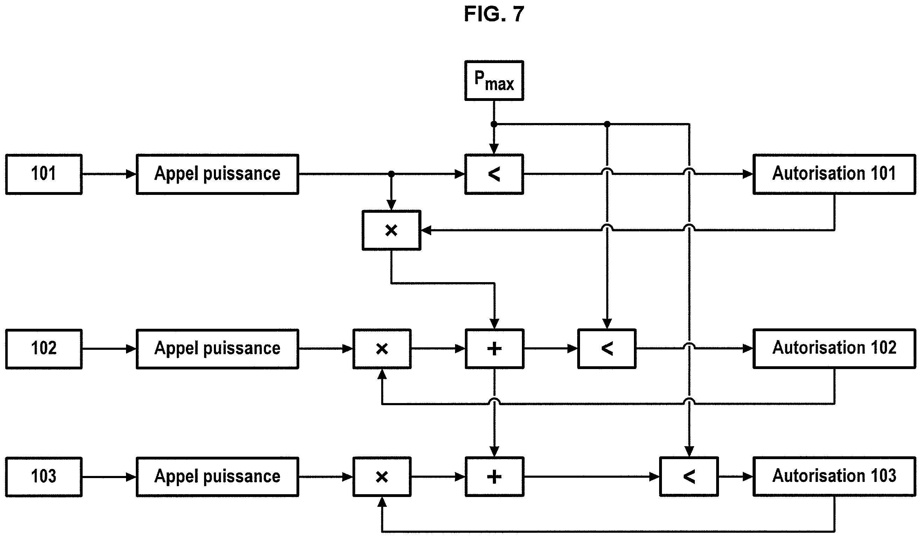

En référence à la figure 7, lorsque les ballons 101, 102, 103 sont différents, les ballons 101, 102, 103 étant numérotés dans l'ordre décroissance de puissance nominale, puis depuis la sortie d'eau chaude vers l'entrée d'eau froide, le pilotage E42 impose de maximiser les appels de puissance à chaque instant. Les autorisations sur les appels de puissance des ballons suivants sont alors rebouclées pour autoriser les ballons suivants s'il y a besoin. La figure 7 illustre les modifications de pilotage à mettre en oeuvre dans ce cas. Le bloc « x » va inhiber l'appel de puissance si celui-ci provoque un dépassement de la puissance maximale $P_{max}$, de sorte que les appels de puissance suivants dans l'ordre puissent être satisfaits si c'est possible.

Dans un second mode de réalisation, le pilotage E4 comprend la détection E40 d'avaries sur un ou plusieurs ballons 101, 102, 103, par exemple à cause d'une résistance hors service. Par exemple, si la puissance estimée d'un ballon 101, 102, 103 baisse de 10% par rapport à une valeur nominale connue ou une valeur identifiée dans le passé, cela peut indiquer que le ballon 101, 102, 103 présente une dégradation. Une alerte peut alors être renvoyée à l'utilisateur et/ou au fournisseur d'électricité.

**Revendications**

1. Procédé de pilotage (E) d'un parc d'équipements électriques (1) comprenant une pluralité (10) de ballons de production d'eau chaude sanitaire (101, 102, 103), le procédé (E) comprenant les étapes de :

   - acquisition (E1) de la courbe de charge du parc (1) à un pas de temps donné (t), sur une période donnée (T),
   - extraction (E2) de la courbe de charge correspondant à la pluralité (10) de ballons (101, 102, 103) à partir de la courbe de charge du parc (1),
   - extraction (E3) de la courbe de charge correspondant à chaque ballon (101, 102, 103) à partir de la courbe de charge de la pluralité (10) de ballons (101, 102, 103) extraite, et
   - pilotage (E4) de l'ensemble des ballons (101, 102, 103) à partir des courbes de charge correspondant à chaque ballon (101, 102, 103) extraites.

2. Procédé (E) selon la revendication 1, dans lequel l'étape d'extraction (E3) de la courbe de charge correspondant à chaque ballon (101, 102, 103) comprend les étapes de :

   ◦ décomposition (E31) de la courbe de charge correspondant à la pluralité (10) de ballons (101, 102, 103) en ballons élémentaires, et
   ◦ association (E32) des ballons élémentaires pour reconstituer la courbe de charge correspondant à chaque ballon (101, 102, 103).

3. Procédé (E) selon l'une des revendications 1 et 2, dans lequel l'étape d'extraction (E2) de la courbe de charge correspondant à la pluralité (10) de ballons (101, 102, 103) comprend une étape de décomposition (E21) de la courbe de charge du parc (1) sur une base dyadique de gaussiennes.

4. Procédé (E) selon l'une des revendications 1 à 3, comprenant une étape préliminaire (E0) de génération d'heuristiques d'apprentissage à partir d'une courbe de charge d'un parc test, les heuristiques étant mis en oeuvre lors de l'étape d'extraction (E2) de la courbe de charge correspondant à la pluralité

(10) de ballons (101, 102, 103).

5. Procédé (E) selon l'une des revendications 1 à 4, dans lequel l'étape de décomposition (E31) de la courbe de charge correspondant à la pluralité (10) de ballons (101, 102, 103) comprend les étapes de :

   - utilisation (E310) d'une suite d'ouvertures morphologiques de taille croissante pour déterminer un ensemble d'instants de démarrage et d'arrêt de ballons, et
   - appariement (E312) des instants de démarrage et d'arrêt déterminés pour générer les ballons élémentaires.

6. Procédé (E) selon l'une des revendications 1 à 5, dans lequel le pas de temps (t) est compris entre 5 et 15 minutes, et vaut de préférence 10 minutes.

7. Procédé (E) selon l'une des revendications 1 à 6, dans lequel la période (T) est comprise entre 6 et 12 heures, et vaut de préférence 8 heures.

8. Procédé (E) selon l'une des revendications 1 à 7, dans lequel l'étape de pilotage (E4) comprend la détermination (E41) d'une puissance maximale ($P_{max}$) disponible pour la pluralité de ballons (101, 102, 103).

9. Procédé (E) selon l'une des revendications 1 à 8, dans lequel l'étape de pilotage (E4) comprend des étapes (E42) d'autorisation et/ou de blocage de la production d'eau chaude d'un ou plusieurs ballons (101, 102, 103).

10. Procédé (E) selon l'une des revendications 1 à 9, dans lequel l'étape de pilotage (E4) comprend la détection (E40) d'avaries sur un ou plusieurs ballons (101, 102, 103).

11. Dispositif de traitement de données (4) comprenant un processeur (5) configuré pour exécuter les étapes d'un procédé (E) selon l'une des revendications 1 à 10.

12. Produit programme d'ordinateur comprenant des instructions de code de programme pour l'exécution des étapes d'un procédé (E) selon l'une des revendications 1 à 10, lorsque ce procédé (E) est exécuté par au moins un processeur (5).

13. Moyen de stockage lisible par un ordinateur, comprenant des instructions de code de programme pour l'exécution des étapes d'un procédé (E) selon l'une des revendications 1 à 10, lorsque ce procédé est exécuté par au moins un processeur (5).

**Patentansprüche**

1. Verfahren zur Steuerung (E) eines Parks elektrischer Ausrüstungen (1), umfassend eine Vielzahl (10) von Brauchwarmwasserboilern (101, 102, 103), wobei das Verfahren (E) die Schritte umfasst:

   - Erfassen (E1) der Belastungskurve des Parks (1) in einem bestimmten Zeitschritt (t) über einen bestimmten Zeitraum (T),
   - Extrahieren (E2) der Belastungskurve, die der Vielzahl (10) von Boilern (101, 102, 103) entspricht, ausgehend von der Belastungskurve des Parks (1),
   - Extrahieren (E3) der Belastungskurve, die jedem Boiler (101, 102, 103) entspricht, ausgehend von der extrahierten Belastungskurve der Vielzahl (10) von Boilern (101, 102, 103), und
   - Steuern (E4) der Gesamtheit der Boiler (101, 102, 103) ausgehend von den extrahierten Belastungskurven, die jedem Boiler (101, 102, 103) entsprechen.

2. Verfahren (E) nach Anspruch 1, wobei der Extraktionsschritt (E3) der Belastungskurve, die jedem Boiler (101, 102, 103) entspricht, die Schritte umfasst:

   o Zerlegen (E31) der Belastungskurve, die der Vielzahl (10) von Boilern (101, 102, 103) entspricht, in elementare Boiler, und
   o Zuordnen (E32) der elementaren Boiler, um die Belastungskurve wiederherzustellen, die jedem Boiler (101, 102, 103) entspricht.

3. Verfahren (E) nach einem der Ansprüche 1 und 2, wobei der Extraktionsschritt (E2) der Belastungskurve, die der Vielzahl (10) von Boilern (101, 102, 103) entspricht, einen Schritt des Zerlegens (E21) der Belastungskurve des Parks (1) auf einer dyadischen Basis Gaußscher Funktionen umfasst.

4. Verfahren (E) nach einem der Ansprüche 1 bis 3, umfassend einen vorherigen Schritt des Generierens (E0) von Lernheuristiken, ausgehend von einer Belastungskurve eines Testparks, wobei die Heuristiken beim Extraktionsschritt (E2) der Belastungskurve durchgeführt werden, die der Vielzahl (10) von Boilern (101, 102, 103) entspricht.

5. Verfahren (E) nach einem der Ansprüche 1 bis 4, wobei der Schritt des Zerlegens (E31) der Belastungskurve, die der Vielzahl (10) von Boilern (101, 102, 103) entspricht, die Schritte umfasst:

   - Verwenden (E310) einer Abfolge morphologischer Öffnungen zunehmender Größe, um eine Gesamtheit von Start- und Stoppmomenten von Boilern zu bestimmen, und

- Pairen (E312) der Start- und Stoppmomente, um elementare Boiler zu generieren.

6. Verfahren (E) nach einem der Ansprüche 1 bis 5, wobei der Zeitschritt (t) zwischen 5 und 15 Minuten liegt und vorzugsweise 10 Minuten beträgt.

7. Verfahren (E) nach einem der Ansprüche 1 bis 6, wobei der Zeitraum (T) zwischen 6 und 12 Stunden liegt und vorzugsweise 8 Stunden beträgt.

8. Verfahren (E) nach einem der Ansprüche 1 bis 7, wobei der Steuerschritt (E4) das Bestimmen (E41) einer maximalen Leistung ($P_{max}$) umfasst, die für die Vielzahl von Boilern (101, 102, 103) zur Verfügung steht.

9. Verfahren (E) nach einem der Ansprüche 1 bis 8, wobei der Steuerschritt (E4) Schritte des Genehmigens und/oder des Blockierens (E42) der Erzeugung von Warmwasser von einem oder mehreren Boilern (101, 102, 103) umfasst.

10. Verfahren (E) nach einem der Ansprüche 1 bis 9, wobei der Steuerschritt (E4) das Ermitteln (E40) von Havarien bei einem oder mehreren Boilern (101, 102, 103) umfasst.

11. Datenverarbeitungsvorrichtung (4), umfassend einen Prozessor (5), der ausgelegt ist, um die Schritte eines Verfahrens (E) nach einem der Ansprüche 1 bis 10 durchzuführen.

12. Rechnerprogrammprodukt, umfassend Programmcodebefehle für die Ausführung der Schritte eines Verfahrens (E) nach einem der Ansprüche 1 bis 10, wenn dieses Verfahren (E) von mindestens einem Prozessor (5) ausgeführt wird.

13. Rechnerlesbares Speichermittel, umfassend Programmcodebefehle für die Ausführung der Schritte eines Verfahrens (E) nach einem der Ansprüche 1 bis 10, wenn dieses Verfahren von mindestens einem Prozessor (5) ausgeführt wird.

**Claims**

1. A method for controlling (E) a fleet of electrical equipment (1) comprising a plurality (10) of domestic hot water production tanks (101, 102, 103), the method (E) comprising the steps of:

- acquiring (E1) the load curve of the fleet (1) at a given time step (t), over a given period (T),
- extracting (E2) the load curve corresponding to the plurality (10) of tanks (101, 102, 103) from the load curve of the fleet (1),

- extracting (E3) the load curve corresponding to each tank (101, 102, 103) from the extracted load curve of the plurality (10) of tanks (101, 102, 103), and
- controlling (E4) the set of tanks (101, 102, 103) from the extracted load curves corresponding to each tank (101, 102, 103).

2. The method (E) according to claim 1, wherein the step of extracting (E3) the load curve corresponding to each tank (101, 102, 103) comprises the steps of:

o decomposing (E31) the load curve corresponding to the plurality (10) of tanks (101, 102, 103) into elementary tanks, and
o associating (E32) the elementary tanks to reconstitute the load curve corresponding to each tank (101, 102, 103).

3. The method (E) according to any of claims 1 and 2, wherein the step of extracting (E2) the load curve corresponding to the plurality (10) of tanks (101, 102, 103) comprises a step of decomposing (E21) the load curve of the fleet (1) on a Gaussian dyadic basis.

4. The method (E) according to any of claims 1 to 3, comprising a preliminary step of generating (E0) learning heuristics from a load curve of a test fleet, the heuristics being implemented during the step of extracting (E2) the load curve corresponding to the plurality (10) tanks (101, 102, 103).

5. The method (E) according to any of claims 1 to 4, wherein the step of decomposing (E31) the load curve corresponding to the plurality (10) of tanks (101, 102, 103) comprises the steps of:

- using (E310) a series of morphological openings of increasing size to determine a set of tank start and stop times, and
- pairing (E312) the start and stop times determined to generate the elementary tanks.

6. The method (E) according to any of claims 1 to 5, wherein the time step (t) is comprised between 5 and 15 minutes, and is preferably of 10 minutes.

7. The method (E) according to any of claims 1 to 6, wherein the period (T) is comprised between 6 and 12 hours, and is preferably of 8 hours.

8. The method (E) according to any of claims 1 to 7, wherein the controlling step (E4) comprises determining (E41) a maximum power ($P_{max}$) available for the plurality of tanks (101, 102, 103).

9. The method (E) according to any of claims 1 to 8, wherein the controlling step (E4) comprises steps of authorizing and/or blocking (E42) the production of hot water from one or more tanks (101, 102, 103).

10. The method (E) according to any of claims 1 to 9, wherein the controlling step (E4) comprises detecting (E40) damage to one or more tanks (101, 102, 103).

11. A data processing device (4) comprising a processor (5) configured to perform the steps of a method (E) according to any of claims 1 to 10.

12. A computer program product comprising program code instructions for the performance of the steps of a method (E) according to any of claims 1 to 10, when this method (E) is performed by at least one processor (5).

13. A storage medium readable by a computer, comprising program code instructions for the performance of the steps of a method (E) according to any of claims 1 to 10, when this method is executed by at least one processor (5).

FIG. 1

**FIG. 2**

FIG. 3

EP 3 502 809 B1

**FIG. 4**

$$\Delta P_i^d \geq (3,5,7)\sigma_{ECS} \Rightarrow (1,2,3)t_i^d$$

$$(t_i^d, \Delta P_i^d, i = 1...N_d$$

Sélection du dernier $t_j^a$ disponible

$$(t_j^a, \Delta P_j^a, j = 1...N_a$$

Mise à jour des $t_j^a$ disponibles

$$(t_k^d, t_k^a, \Delta_k^a), k = 1...N_d^{augm}$$

EP 3 502 809 B1

FIG. 5

FIG. 6

EP 3 502 809 B1

FIG. 7

EP 3 502 809 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 3017975

**Littérature non-brevet citée dans la description**

• **MABROUKA EL GUEDRI.** *Caractérisation aveugle de la courbe de charge électrique : Détection, classification et estimation des usages dans les secteurs résidentiel et tertiaire,* 09 Novembre 2009